# EUROPÄISCHE PATENTSCHRIFT

(11) **EP 2 288 652 B1**
(45) Veröffentlichungstag und Bekanntmachung des Hinweises auf die Patenterteilung: **19.09.2012**
(21) Anmeldenummer: 09757299.4
(22) Anmeldetag: 04.06.2009
(51) Int. Cl.: C08K 5/14, C07C 409/34, C07C 407/00

(54) **ZUBEREITUNG ZUR INITIIERUNG VON RADIKALISCHEN REAKTIONEN**
PREPARATION FOR INITIATING RADICAL REACTIONS
PRÉPARATION POUR AMORCER DES RÉACTIONS RADICALAIRES

(30) Priorität: 06.06.2008 EP 08157736
(43) Veröffentlichungstag der Anmeldung: 02.03.2011
(73) Patentinhaber: United Initiators GmbH & Co. KG, 82049 Pullach (DE)
(72) Erfinder: WEINMAIER, Josef Helmut, 84453 Mühldorf (DE); HERMANN, Dominik, 85221 Dachau (DE); KUNZ, Martin, 82544 Dettenhausen (DE)
(74) Vertreter: Dey, Michael
(86) Internationale Anmeldenummer: PCT/EP2009/004017
(87) Internationale Veröffentlichungsnummer: WO 2009/146916

(56) Entgegenhaltungen:
- EP-A- 0 235 537
- EP-A- 1 004 622
- EP-A- 1 233 014
- WO-A-99/36466
- US-A- 1 913 775

## Beschreibung

Gegenstand der Erfindung sind Zubereitungen zur Initiierung von radikalischen Reaktionen, die sich insbesondere zur Heißvernetzung von Silikonkautschuk eignen.

Dibenzoylperoxid und symmetrisch substituierte Dibenzoylperoxide sind dem Fachmann als Initiatoren für radikalische Reaktionen bekannt. Die Initiatorwirkung wird dabei durch Erhitzen erzielt, was zum radikalischen Zerfall des Dibenzoylperoxids unter Bildung von Phenylradikalen bzw. substituierten Phenylradikalen führt.

Technisch wichtige radikalische Reaktionen, die durch Dibenzoylperoxid und symmetrisch substituierte Dibenzoylperoxide initiiert werden können, sind radikalische Polymerisationen und die radikalische Quervernetzung von Polymeren.

Von besonderer Bedeutung ist die Herstellung von heißvulkanisiertem Silikonkautschuk durch Quervernetzen eines Polyorganosiloxans. Die Herstellung von heißvulkanisierten Silikonkautschukartikeln umfasst in der Regel einen Extrusions- oder Spritzgussvorgang mit anschließender Vernetzung bei erhöhter Temperatur innerhalb oder außerhalb einer Form. Dazu wird das Peroxid in einem Kneter oder auf einem Walzenstuhl in den Silikonkautschuk eingemischt und die resultierende Mischung dann auf einem Extruder, einer Spritzgussmaschine, einer Presse oder einer anderen formgebenden Vorrichtung verarbeitet. Nach dieser Formgebung wird dann in der Heißvulkanisation die Vernetzungsreaktion durch Erhöhen der Temperatur über die Zerfallsstemperatur des Peroxids eingeleitet. Bei diesem Verfahren werden üblicherweise die symmetrisch substituierten Dibenzoylperoxide Bis-(2,4-dichlorbenzoyl)-peroxid oder Di-(4-methylbenzoyl)-peroxid als Initiatoren verwendet, die zur besseren Einarbeitung in den Silikonkautschuk üblicherweise als Mischungen mit Silikonöl eingesetzt werden.

EP 1 004 622 beschreibt die Verwendung von Mischungen aus Di-(4-methylbenzoyl)-peroxid und einem oder mehreren Peroxiden aus der Reihe Dibenzoylperoxid, Dicumylperoxid 2,5-Dimethylhexan-2,5-di-tert-butylperoxid und Di-tert-butylperoxid zur Heißvulkanisation von Silikonkautschuk. Die Heißvulkanisation erfolgt dabei unter den gleichen Bedingungen wie mit Di-(4-methylbenzoyl)-peroxid allein. Die mit den Mischungen erhaltenen Produkte zeigen bessere mechanische Eigenschaften, sowie keine Gelbfärbung und geringere Geruchsbelästigung.

WO 99/36466 offenbart die unsymmetrisch substituierten Dibenzoylperoxide o,p'-Bis(methylbenzoyl)peroxid und m,p'-Bis(methylbenzoyl)peroxid als Initiatoren zur Erhöhung der Schmelzeviskosität von Polypropylen.

An Initiatoren für radikalische Reaktionen werden zwei Anforderungen gestellt, die sich in der Regel widersprechen. Der Initiator soll zum Einen eine möglichst niedrige Zerfallstemperatur der Peroxide aufweisen, damit die radikalische Reaktion bei einer niedrigeren Temperatur initiiert werden kann, was Energie spart und temperaturbedingte Verschlechterungen der Produkteigenschaften vermeidet, oder bei der gleichen Temperatur eine raschere Reaktion erzielt werden kann, was zum Beispiel bei der radikalischen Quervernetzung von Polymeren eine Erhöhung der Verarbeitungskapazität ermöglicht. Der Initiator soll zum Anderen aber ausreichend lagerstabil sein, wobei die Stabilität vorzugsweise so groß sein soll, dass der Initiator ohne Kühlung gelagert und transportiert werden kann, was bei einem als Typ D klassifizierten organischen Peroxid eine selbstbeschleunigende Zersetzungstemperatur (SADT, self accelerating decomposition temperature) von mindestens 50 °C und keinen oder einen geringen Effekt beim Erhitzen unter Einschluss bei Tests der Serie E der "Recommendations on the Transport of Dangerous Goods, Manual of Tests and Criteria" der Vereinten Nationen erfordert.

Es wurde nun überraschend gefunden, dass Zubereitungen, die mindestens 50 mol-% eines symmetrischen Dibenzoylperoxids und 0,3 bis 50 mol-% eines unsymmetrischen Dibenzoylperoxids enthalten, eine deutlich niedrigere Zerfallstemperatur der Peroxide als das entsprechende symmetrische Dibenzoylperoxid aufweisen, ohne dass die selbstbeschleunigende Zersetzungstemperatur in gleichem Maß herabgesetzt ist.

Gegenstand der Erfindung ist deshalb eine Zubereitung zur Initiierung von radikalischen Reaktionen, die eine Mischung von Dibenzoylperoxiden umfasst, wobei die Mischung von Dibenzoylperoxiden von 50 bis 99,7 mol-% an einem symmetrischen Dibenzoylperoxid und 0,3 bis 50 mol-% unsymmetrische Dibenzoylperoxide enthält.

Gegenstand der Erfindung ist weiterhin die Verwendung der erfindungsgemäßen Zubereitung zur Heißvernetzung von Silikonkautschuk, sowie ein Verfahren zur Herstellung der erfindungsgemäßen Zubereitung, das die Umsetzung einer Mischung aus Benzoylchloriden, enthaltend ein erstes Benzoylchlorid und ein davon verschiedenes zweites Benzoylchlorid, mit Wasserstoffperoxid umfasst, wobei die Mischung der Benzoylchloride 70 bis 99,7 mol-% des ersten Benzoylchlorids und 0,3 bis 30 mol-% des zweiten Benzoylchlorids enthält.

Gegenstand der Erfindung sind außerdem neue unsymmetrisch substituierte Dibenzoylperoxide, die einen 2,4-Dichlorbenzoylrest und einen substituierten Benzoylrest aus der Gruppe 2-Chlorbenzoyl, 3-Chlorbenzoyl, 4-Chlorbenzoyl, 2,3-Dichlorbenzoyl, 2,5-Dichlorbenzoyl, 2,6-Dichlorbenzoyl, 3,4-Dichlorbenzoyl, 3,5-Dichlorbenzoyl, 2,3,4-Trichlorbenzoyl, 2,3,5-Trichlorbenzoyl, 2,3,6-Trichlorbenzoyl, 2,4,5-Trichlorbenzoyl, 2,4,6-Trichlorbenzoyl, 3,4,5-Trichlorbenzoyl, 2,3,4,5-Tetrachlorbenzoyl, 2,3,4,6-Tetrachlorbenzoyl, 2,3,5,6-Tetrachlorbenzoyl und Pentachlorbenzoyl oder einen 4-Methylbenzoylrest und einen substituierten Benzoylrest aus der Gruppe 2,3-Dimethylbenzoyl, 2,4-Dimethylbenzoyl, 2,5-Dimethylbenzoyl, 2,6-Dimethylbenzoyl, 3,4-Dimethylbenzoyl, 3,5-Dimethylbenzoyl, 2,3,4-Trimethylbenzoyl, 2,3,5-Trimethylbenzoyl, 2,3,6-Trimethylbenzoyl, 2,4,5-Trimethylbenzoyl, 2,4,6-Trimethylbenzoyl, 3,4,5-Trimethylbenzoyl, 2,3,4,5-Tetramethylbenzoyl, 2,3,4,6-Tetramethylbenzoyl, 2,3,5,6-Tetramethylbenzoyl und Pentamethylbenzoyl enthalten.

Die erfindungsgemäße Zubereitung zur Initiierung von radikalischen Reaktionen umfasst eine Mischung von Dibenzoylperoxiden. Diese Mischung von Dibenzoylperoxiden enthält von 50 bis 99,7 mol-% an einem symmetrischen Dibenzoylperoxid und 0,3 bis 50 mol-% unsymmetrische Dibenzoylperoxide. Symmetrische Dibenzoylperoxide im Sinne der Erfindung sind unsubstituiertes Dibenzoylperoxid und substituierte Dibenzoylperoxide, die zwei gleich substituierte Benzoylreste aufweisen. Unsymmetrische Dibenzoylperoxide im Sinne der Erfindung sind Dibenzoylperoxide, die einen unsubstituierten und einen substituierten Benzoylrest oder zwei unterschiedlich substituierte Benzoylreste aufweisen. Vorzugsweise ist das symmetrische Dibenzoylperoxid ein substituiertes Dibenzoylperoxide mit zwei gleich substituierten Benzoylresten.

Vorzugsweise enthält die Mischung 80 bis 97 mol-% an einem symmetrischen Dibenzoylperoxid und 1 bis 20 mol-% unsymmetrische Dibenzoylperoxide. Durch die Wahl der Anteile an symmetrischem Dibenzoylperoxid und unsymmetrischen Dibenzoylperoxiden lässt sich eine gegenüber dem symmetrischen Dibenzoylperoxid deutlich verringerte Zerfallstemperatur der Peroxide erreichen, ohne dass die selbstbeschleunigende Zersetzungstemperatur in gleichem Maß herabgesetzt ist.

Vorzugsweise enthalten die unsymmetrischen Dibenzoylperoxide der Mischung einen Benzoylrest, der das gleiche Substitutionsmuster aufweist wie der Benzoylrest des in der Mischung enthaltenen symmetrischen Dibenzoylperoxids. Diese Ausführungsform hat den Vorteil, dass die bei dem Zerfall der in der Mischung enthaltenen Benzoylperoxide gebildeten Produkte sich nur in geringem Maß von den beim Zerfall des symmetrischen Dibenzoylperoxids gebildeten Produkten unterscheiden. Die erfindungsgemäßen Zubereitungen entsprechend dieser Ausführungsform können deshalb an Stelle von Zubereitungen eingesetzt werden, die nur das symmetrische Dibenzoylperoxid enthalten, ohne dass es zu Veränderungen in den Eigenschaften der mit der Zubereitung hergestellten Endprodukte kommt.

Neben dem zu 50 bis 99,7 mol-% enthaltenen symmetrischen Dibenzoylperoxid kann die Mischung noch weitere symmetrische Dibenzoylperoxide enthalten. Vorzugsweise beträgt der Anteil an weiteren symmetrischen Dibenzoylperoxiden an der Mischung jedoch weniger als 5 mol-%, besonders bevorzugt weniger als 1 mol-%.

In einer bevorzugten Ausführungsform enthält die erfindungsgemäße Zubereitung Bis-(2,4-dichlorbenzoyl)-peroxid als symmetrisches Dibenzoylperoxid. Diese bevorzugte Ausführungsform ermöglicht das Heißvulkanisieren von Silikonkautschuk mit besonders hoher Vernetzungsgeschwindigkeit.

Besonders bevorzugt sind Zubereitungen, die Bis-(2,4-dichlorbenzoyl)-peroxid und ein unsymmetrisches Dibenzoylperoxid enthalten, wobei das unsymmetrische Dibenzoylperoxid einen 2,4-Dichlorbenzoylrest und einen Rest aus der Gruppe Benzoyl, 2-Chlorbenzoyl, 3-Chlorbenzoyl, 4-Chlorbenzoyl, 2,3-Dichlorbenzoyl, 2,5-Dichlorbenzoyl, 2,6-Dichlorbenzoyl, 3,4-Dichlorbenzoyl, 3,5-Dichlorbenzoyl, 2,3,4-Trichlorbenzoyl, 2,3,5-Trichlorbenzoyl, 2,3,6-Trichlorbenzoyl, 2,4,5-Trichlorbenzoyl, 2,4,6-Trichlorbenzoyl, 3,4,5-Trichlorbenzoyl, 2,3,4,5-Tetrachlorbenzoyl, 2,3,4,6-Tetrachlorbenzoyl, 2,3,5,6-Tetrachlorbenzoyl und Pentachlorbenzoyl enthält. Diese besonders bevorzugten Zubereitungen können ohne Rezepturveränderungen an Stelle von reinem Bis-(2,4-dichlorbenzoyl)-peroxid zum Heißvulkanisieren von Silikonkautschuk eingesetzt werden und ermöglichen gegenüber Bis-(2,4-dichlorbenzoyl)-peroxid eine erhöhte Vernetzungsgeschwindigkeit.

In einer weiteren bevorzugten Ausführungsform enthält die erfindungsgemäße Zubereitung Di-(4-methylbenzoyl)-peroxid als symmetrisches Dibenzoylperoxid.

Besonders bevorzugt sind Zubereitungen, die Di-(4-methylbenzoyl)-peroxid und ein unsymmetrisches Dibenzoylperoxid enthalten, wobei das unsymmetrische Dibenzoylperoxid einen 4-Methylbenzoylrest und einen Rest aus der Gruppe Benzoyl, 2-Methylbenzoyl, 3-Methylbenzoyl, 2,3-Dimethylbenzoyl, 2,4-Dimethylbenzoyl, 2,5-Dimethylbenzoyl, 2,6-Dimethylbenzoyl, 3,4-Dimethylbenzoyl, 3,5-Dimethylbenzoyl, 2,3,4-Trimethylbenzoyl, 2,3,5-Trimethylbenzoyl, 2,3,6-Trimethylbenzoyl, 2,4,5-Trimethylbenzoyl, 2,4,6-Trimethylbenzoyl, 3,4,5-Trimethylbenzoyl, 2,3,4,5-Tetramethylbenzoyl, 2,3,4,6-Tetramethylbenzoyl, 2,3,5,6-Tetramethylbenzoyl und Pentamethylbenzoyl enthält. Diese besonders bevorzugten Zubereitungen ermöglicht das Heißvulkanisieren von Silikonkautschuk mit hoher Vernetzungsgeschwindigkeit ohne die Bildung von chlorierten Folgeprodukten des Initiators.

Die erfindungsgemäße Zubereitung kann zusätzlich zu der Mischung von Dibenzoylperoxiden noch weitere Bestandteile enthalten, vorzugsweise stabilisierende und phlegmatisierende Verbindungen, die eine Zersetzung der Dibenzoylperoxide bei Temperaturen unterhalb der Zersetzungstemperatur verhindern oder verlangsamen. Vorzugsweise enthält die Zubereitung zusätzlich zu der Mischung von Dibenzoylperoxiden noch Wasser oder Silikonöl. Besonders bevorzugt sind Zubereitungen, die 10 bis 60 Gew.-% der Mischung von Dibenzoylperoxiden und 40 bis 90 Gew.-% Silikonöl enthalten, insbesondere solche, die neben diesen Anteilen an Dibenzoylperoxiden und Silikonöl weniger als 1 Gew.-% Wasser enthalten. Die Zubereitungen aus Dibenzoylperoxiden und Silikonöl mit geringem Wasseranteil eignen sich besonders zur Initiierung von radikalischen Reaktionen in unpolaren Medien, insbesondere in Schmelzen oder Lösungen von unpolaren Polymeren.

Die erfindungsgemäßen Zubereitungen werden vorzugsweise zur Heißvernetzung von Silikonkautschuk verwendet, wobei besonders bevorzugt Zubereitungen verwendet werden, die 10 bis 60 Gew.-% der Mischung von Dibenzoylperoxiden und 40 bis 90 Gew.-% Silikonöl enthalten. Mit den erfindungsgemäßen Zubereitungen lässt sich bei der Heißvernetzung von Silikonkautschuk gegenüber Zubereitungen mit nur einem symmetrischen Dibenzoylperoxid die Verarbeitungsgeschwindigkeit erhöhen, da die Zerfallstemperatur der Peroxide rascher erreicht wird und die Vernetzung rascher abläuft.

Die erfindungsgemäßen Zubereitungen lassen sich durch Mischen eines symmetrischen Dibenzoylperoxids und eines unsymmetrischen Dibenzoylperoxids, sowie optional weiterer Komponenten herstellen.

Vorzugsweise werden die erfindungsgemäßen Zubereitungen jedoch nach dem erfindungsgemäßen Verfahren hergestellt, indem eine Mischung von Benzoylchloriden, enthaltend ein erstes Benzoylchlorid und ein davon verschiedenes zweites Benzoylchlorid, mit Wasserstoffperoxid umgesetzt wird, wobei die Mischung der Benzoylchloride 70 bis 99,7 mol-% des ersten Benzoylchlorids und 0,3 bis 30 mol-% des zweiten Benzoylchlorids enthält. Der Begriff Benzoylchlorid umfasst im erfindungsgemäßen Verfahren sowohl unsubstituiertes Benzoylchlorid als auch substituierte Benzoylchloride. Die Mischung der Benzoylchloride enthält dabei vorzugsweise 90 bis 98 mol-% des ersten Benzoylchlorids und 2 bis 10 mol-% des zweiten Benzoylchlorids. Zur Bindung des bei der Umsetzung freiwerdenden Chlorwasserstoffs wird vorzugsweise vor oder während der Umsetzung eine Base in mindestens stöchiometrischer Menge zugesetzt, besonders bevorzugt wässrige Natronlauge. Vorzugsweise wird die Base zusammen mit Wasserstoffperoxid vorgelegt und die Mischung der Benzoylchloride während der Umsetzung zudosiert oder es wird Wasserstoffperoxid vorgelegt und die Benzoylchloride und die Base werden parallel zudosiert. An Stelle der Mischung der Benzoylchloride können alternativ auch die beiden Benzoylchloride getrennt parallel zudosiert werden.

Die Benzoylchloride und Wasserstoffperoxid werden im erfindungsgemäßen Verfahren vorzugsweise in einem Molverhältnis von 2 : 1 bis 2 : 4, besonders bevorzugt 2 : 1 bis 2 : 1,5 eingesetzt. Das Molverhältnis von Benzoylchloriden zu Base liegt vorzugsweise im Bereich von 1 : 1 bis 1 : 2, besonders bevorzugt 1 : 1 bis 1 : 1,5. Die Zugabe der Base erfolgt vorzugsweise so, dass sich in der wässrigen Phase der Reaktionsmischung ein pH-Wert im Bereich von 8 bis 14, vorzugsweise 10 bis 14 ergibt. Die Umsetzung erfolgt vorzugsweise bei einer Temperatur im Bereich von -10 bis 50 °C, besonders bevorzugt 0 bis 40 °C.

In einer bevorzugten Ausführungsform des erfindungsgemäßen Verfahrens wird Bis-(2,4-dichlorbenzoyl)-peroxid als erstes Benzoylchlorid eingesetzt. Besonders bevorzugt wird als erstes Benzoylchlorid Bis-(2,4-dichlorbenzoyl)-peroxid und als zweites Benzoylchlorid eine Verbindung aus der Reihe Benzoylchlorid, 2-Chlorbenzoylchlorid, 3-Chlorbenzoylchlorid, 4-Chlorbenzoylchlorid, 2,3-Dichlorbenzoylchlorid, 2,5-Dichlorbenzoylchlorid, 2,6-Dichlorbenzoylchlorid, 3,4-Dichlorbenzoylchlorid, 3,5-Dichlorbenzoylchlorid, 2,3,4-Trichlorbenzoylchlorid, 2,3,5-Trichlorbenzoylchlorid, 2,3,6-Trichlorbenzoylchlorid, 2,4,5-Trichlorbenzoylchlorid, 2,4,6-Trichlorbenzoylchlorid, 3,4,5-Trichlorbenzoylchlorid, 2,3,4,5-Tetrachlorbenzoylchlorid, 2,3,4,6-Tetrachlorbenzoylchlorid, 2,3,5,6-Tetrachlorbenzoylchlorid und Pentachlorbenzoylchlorid eingesetzt.

In einer weiteren bevorzugten Ausführungsform des erfindungsgemäßen Verfahrens wird 4-Methylbenzoylchlorid als erstes Benzoylchlorid eingesetzt. Besonders bevorzugt wird als erstes Benzoylchlorid 4-Methylbenzoylchlorid und als zweites Benzoylchlorid eine Verbindung aus der Reihe Benzoylchlorid, 2-Methylbenzoylchlorid, 3-Methylbenzoylchlorid, 2,3-Dimethylbenzoylchlorid, 2,4-Dimethylbenzoylchlorid, 2,5-Dimethylbenzoylchlorid, 2,6-Dimethylbenzoylchlorid, 3,4-Dimethylbenzoylchlorid, 3,5-Dimethylbenzoylchlorid, 2,3,4-Trimethylbenzoylchlorid, 2,3,5-Trimethylbenzoylchlorid, 2,3,6-Trimethylbenzoylchlorid, 2,4,5-Trimethylbenzoylchlorid, 2,4,6-Trimethylbenzoylchlorid, 3,4,5-Trimethylbenzoylchlorid, 2,3,4,5-Tetramethylbenzoylchlorid, 2,3,4,6-Tetramethylbenzoylchlorid, 2,3,5,6-Tetramethylbenzoylchlorid und Pentamethylbenzoylchlorid eingesetzt.

Die Herstellung von Zubereitungen, die zusätzlich zu der Mischung von Dibenzoylperoxiden noch Silikonöl enthalten, erfolgt vorzugsweise nach den in den Beispielen von EP 235 537 beschriebenen Verfahren.

Die folgenden Beispiele illustrieren die Erfindung, ohne jedoch den Gegenstand der Erfindung zu beschränken.

### Beispiele:

### Bestimmung der Zerfallstemperatur

Die Zerfallstemperatur der peroxidhaltigen Zubereitungen wurde durch Differentialthermoanalyse mit einem Gerät DSC20 der Firma Mettler bestimmt. Dazu wurden ca. 3 mg Probe in einen offenen 40 µl Aluminiumtiegel eingewogen, auf 70 °C temperiert und mit 1 °C/min auf 150 °C erhitzt. Die Zerfallstemperatur ist die Temperatur, bei der während des Aufheizens die maximale Exothermie bestimmt wurde.

### Beispiel 1

### Wasserfeuchte Zubereitung enthaltend

Bis-(2,4-dichlorbenzoyl)-peroxid und 2-Chlorbenzoyl-2,4-dichlorbenzoyl-peroxid

### 125 g 2,4-Dichlorbenzoylchlorid, 6,6 g

2-Chlorbenzoylchlorid und 35 g Isohexan wurden gemischt und unter Rühren und Kühlung bei 20°C zu einer Mischung aus 180 g Wasser, 132 g 25 Gew.-% Natronlauge und 21 g 70 Gew.-% Wasserstoffperoxid gegeben. Nach der Zugabe wurde weitere 30 Minuten gerührt, filtriert und der Feststoff mit Wasser, gewaschen.

In gleicher Weise wurden Zubereitungen aus Mischungen von 2,4-Dichlorbenzoylchlorid und 2-Chlorbenzoylchlorid hergestellt, in denen der Anteil an 2-Chlorbenzoylchlorid 1, 2, 10 und 20 Gew.-% an Stelle von 5 Gew.-% betrug. Tabelle 1 zeigt die für die Zubereitungen bestimmten Zerfallstemperaturen im Vergleich zu einer Zubereitung, die als Peroxid nur Bis-(2,4-dichlorbenzoyl)-peroxid enthielt.

**Tabelle 1**

| Zerfallstemperatur von wasserfeuchten Zubereitungen enthaltend Bis-(2,4-dichlorbenzoyl)-peroxid und 2-Chlorbenzoyl-2,4-dichlorbenzoyl-peroxid | |
|---|---|
| Anteil an 2-Chlorbenzoylchlorid in der eingesetzten Mischung mit 2,4-Dichlorbenzoylchlorid in Gew.-% | Zerfallstemperatur in °C |
| 0* | 101,5 |
| 1 | 100,5 |
| 2 | 99 |
| 5 | 97 |
| 10 | 94 |
| 20 | 88 |

| | |
|---|---|
| *nicht erfindungsgemäß | |

### Beispiel 2

### Zubereitung enthaltend Bis-(2,4-dichlorbenzoyl)-peroxid, 2-Chlorbenzoyl-2,4-dichlorbenzoyl-peroxid und Silikonöl

Zu einer Mischung aus 3,75 kg Wasser, 485 g 35 Gew.-% Wasserstoffperoxid, 243 g Silikonöl AK 350 der Firma Wacker und 1134 g 25 Gew.-% Natronlauge wurde innerhalb von 30 min unter starkem Rühren und Kühlen auf 10 bis 20 °C eine Mischung aus 854 g 2,4-Dichlorbenzoylchlorid, 45 g 2-Chlorbenzoylchlorid, 500 g Silikonöl AK 350 der Firma Wacker und 203 g Isohexan zugegeben. Es wurde weitere 30 min gerührt, die wässrige Phase abgetrennt und das Produkt dreimal mit je 8 l Wasser gewaschen. Das pastöse Produkt wurde mit wenig Natronlauge neutralisiert und in einem Kneter bei 30 °C unter Durchleiten von Luft 4 h geknetet um Restfeuchte zu verdunsten. Anschließend wurde so viel weiteres Silikonöl zugesetzt, dass der Gehalt an organischem Peroxid im Bereich von 49 bis 52 Gew.-% lag.

In gleicher Weise wurden Zubereitungen aus Mischungen von 2,4-Dichlorbenzoylchlorid und 2-Chlorbenzoylchlorid hergestellt, in denen der Anteil an 2-Chlorbenzoylchlorid 1, 3, 10 und 20 Gew.-% an Stelle von 5 Gew.-% betrug.

Tabelle 2 zeigt die für die Zubereitungen bestimmten Zerfallstemperaturen im Vergleich zu einer Zubereitung, die als Peroxid nur Bis-(2,4-dichlorbenzoyl)-peroxid enthielt.

**Tabelle 2**

| Zerfallstemperatur von Zubereitungen enthaltend Bis-(2,4-dichlorbenzoyl)-peroxid, 2-Chlorbenzoyl-2,4-dichlorbenzoyl-peroxid und Silikonöl | |
|---|---|
| Anteil an 2-Chlorbenzoylchlorid in der eingesetzten Mischung mit 2,4-Dichlorbenzoylchlorid in Gew.-% | Zerfallstemperatur in °C |
| 0* | 103 |
| 3 | 99 |
| 5 | 96 |
| 10 | 94 |
| 20 | 84 |

| | |
|---|---|
| *nicht erfindungsgemäß | |

Für die Zubereitungen, die ausgehend von Mischungen von 2,4-Dichlorbenzoylchlorid und 2-Chlorbenzoylchlorid mit Anteilen an 2-Chlorbenzoylchlorid von 3, 5 und 10 Gew.-% hergestellt wurden, wurde die SADT mit Test H.4 der "Recommendations on the Transport of Dangerous Goods, Manual of Tests and Criteria" der Vereinten Nationen bestimmt. Für alle drei Zubereitungen betrug die SADT mehr als 50 °C. Diese Zubereitungen dürfen deshalb ohne Kühlung gelagert und transportiert werden.

### Beispiel 3

### Zubereitung enthaltend Bis-(2,4-dichlorbenzoyl)-peroxid, 4-Chlorbenzoyl-2,4-dichlorbenzoyl-peroxid und Silikonöl

Beispiel 2 wurde wiederholt, jedoch mit 4-Chlorbenzoylchlorid an Stelle von 2-Chlorbenzoylchlorid.

Für die erhaltene Zubereitung wurde eine Zerfallstemperatur von 93 °C bestimmt.

Für eine analoge Zubereitung aus Di-4-chlorbenzoyl-peroxid und Silikonöl wurde eine Zerfallstemperatur von 137 °C bestimmt.

### Beispiel 4

### Zubereitung enthaltend Bis-(2,4-dichlorbenzoyl)-peroxid, 2,3-Dichlorbenzoyl-2,4-dichlorbenzoyl-peroxid und Silikonöl

Die Herstellung der Zubereitung erfolgte analog Beispiel 2 mit einer Mischung aus 891,5 g 2,4-Dichlorbenzoylchlorid und 8,2 g 2,3-Dichlorbenzoylchlorid.

Für die erhaltene Zubereitung wurde eine Zerfallstemperatur von 100 °C bestimmt.

### Beispiel 5

### Zubereitung enthaltend Bis-(2,4-dichlorbenzoyl)-peroxid, 2,4-Dichlorbenzoyl-2,6-dichlorbenzoyl-peroxid und Silikonöl

Die Herstellung der Zubereitung erfolgte analog Beispiel 2 mit einer Mischung aus 891 g 2,4-Dichlorbenzoylchlorid und 9,0 g 2,6-Dichlorbenzoylchlorid.

Für die erhaltene Zubereitung wurde eine Zerfallstemperatur von 102 °C bestimmt.

### Beispiel 6

### Zubereitung enthaltend Bis-(2,4-dichlorbenzoyl)-peroxid, 2,4-Dichlorbenzoyl-3,4-dichlorbenzoyl-peroxid und Silikonöl

Die Herstellung der Zubereitung erfolgte analog Beispiel 2 mit einer Mischung aus 891 g 2,4-Dichlorbenzoylchlorid und 12,3 g 3,4-Dichlorbenzoylchlorid.

Für die erhaltene Zubereitung wurde eine Zerfallstemperatur von 99 °C bestimmt.

### Beispiel 7

### Zubereitung enthaltend Di-(4-methylbenzoyl)-peroxid, 2-Methylbenzoyl-4-methylbenzoyl-peroxid und Silikonöl

Zu einer Mischung aus 6,29 kg Wasser, 507 g 35 Gew.-% Wasserstoffperoxid, 270 g Silikonöl AK 350 der Firma Wacker und 1890 g 25 Gew.-% Natronlauge wurde innerhalb von 30 min unter starkem Rühren und Kühlen auf 10 bis 20 °C eine Mischung aus 1040 g 4-Methylbenzoylchlorid, 114 g 2-Methylbenzoylchlorid, 589 g Silikonöl AK 350 der Firma Wacker und 247 g Isohexan zugegeben. Es wurde weitere 30 min gerührt, die wässrige Phase abgetrennt und das Produkt dreimal mit je 10 1 Wasser gewaschen. Das pastöse Produkt wurde mit wenig Natronlauge neutralisiert und in einem Kneter bei 30 °C unter Durchleiten von Luft 4 h geknetet um Restfeuchte zu verdunsten. Anschließend wurde so viel weiteres Silikonöl zugesetzt, dass der Gehalt an organischem Peroxid im Bereich von 49 bis 52 Gew.-% lag.

In gleicher Weise wurde eine Zubereitung aus einer Mischung von 4-Methylbenzoylchlorid und 2-Methylbenzoylchlorid hergestellt, in der der Anteil an 2-Methylbenzoylchlorid 20 Gew.-% an Stelle von 10 Gew.-% betrug.

Tabelle 3 zeigt die für die Zubereitungen bestimmten Zerfallstemperaturen im Vergleich zu einer Zubereitung, die als Peroxid nur Di-(4-methylbenzoyl)-peroxid enthielt.

**Tabelle 3**

| Zerfallstemperatur von Zubereitungen enthaltend Di-(4-methylbenzoyl)-peroxid, 2-Methylbenzoyl-4-methylbenzoyl-peroxid und Silikonöl | |
|---|---|
| Anteil an 2-Methylbenzoylchlorid in der eingesetzten Mischung mit 4-Methylbenzoylchlorid in Gew.-% | Zerfallstemperatur in °C |
| 0* | 136 |
| 10 | 128 |
| 20 | 123 |

| | |
|---|---|
| *nicht erfindungsgemäß | |

## Patentansprüche

1. Zubereitung zur Initiierung von radikalischen Reaktionen, umfassend eine Mischung von Dibenzoylperoxiden, **dadurch gekennzeichnet, dass** die Mischung von Dibenzoylperoxiden von 80 bis 99,7 mol-% an einem symmetrischen Dibenzoylperoxid und 0,3 bis 20 mol-% unsymmetrische Dibenzoylperoxide enthält.

2. Zubereitung gemäß Anspruch 1,
**dadurch gekennzeichnet, dass** die unsymmetrischen Dibenzoylperoxide einen Benzoylrest enthalten, der das gleiche Substitutionsmuster aufweist wie der Benzolyrest des symmetrischen Dibenzoylperoxids.

3. Zubereitung gemäß einem der Ansprüche 1 bis 2,
**dadurch gekennzeichnet,**
**dass** das symmetrische Dibenzoylperoxid Bis-(2,4-dichlorbenzoyl) -peroxid ist.

4. Zubereitung gemäß Anspruch 3,
**dadurch gekennzeichnet,**
**dass** sie ein unsymmetrisches Dibenzoylperoxid enthält, das einen 2,4-Dichlorbenzoylrest und einen Rest ausgewählt aus der Gruppe bestehend aus Benzoyl, 2-Chlorbenzoyl, 3-Chlorbenzoyl, 4-Chlorbenzoyl, 2,3-Dichlorbenzoyl, 2,5-Dichlorbenzoyl, 2,6-Dichlorbenzoyl, 3,4-Dichlorbenzoyl, 3,5-Dichlorbenzoyl, 2,3,4-Trichlorbenzoyl, 2,3,5-Trichlorbenzoyl, 2,3,6-Trichlorbenzoyl, 2,4,5-Trichlorbenzoyl, 2,4,6-Trichlorbenzoyl, 3,4,5-Trichlorbenzoyl, 2,3,4,5-Tetrachlorbenzoyl, 2,3,4,6-Tetrachlorbenzoyl, 2,3,5,6-Tetrachlorbenzoyl und Pentachlorbenzoyl enthält.

5. Zubereitung gemäß einem der Ansprüche 1 bis 2,
**dadurch gekennzeichnet,**
**dass** das symmetrische Dibenzoylperoxid Di-(4-methylbenzoyl)-peroxid ist.

6. Zubereitung gemäß Anspruch 5,
**dadurch gekennzeichnet,**
**dass** sie ein unsymmetrisches Dibenzoylperoxid enthält, das einen 4-Methylbenzoylrest und einen substituierten Rest ausgewählt aus der Gruppe bestehend aus Benzoyl, 2-Methylbenzoyl, 3-Methylbenzoyl, 2,3-Dimethylbenzoyl, 2,4-Dimethylbenzoyl, 2,5-Dimethylbenzoyl, 2,6-Dimethylbenzoyl, 3,4-Dimethylbenzoyl, 3,5-Dimethylbenzoyl, 2,3,4-Trimethylbenzoyl, 2,3,5-Trimethylbenzoyl, 2,3,6-Trimethylbenzoyl, 2,4,5-Trimethylbenzoyl, 2,4,6-Trimethylbenzoyl, 3,4,5-Trimethylbenzoyl, 2,3,4,5-Tetramethylbenzoyl, 2,3,4,6-Tetramethylbenzoyl, 2,3,5,6-Tetramethylbenzoyl und Pentamethylbenzoyl enthält.

7. Zubereitung gemäß einem der Ansprüche 1 bis 6,
**dadurch gekennzeichnet,**
**dass** sie 10 bis 60 Gew.-% der Mischung von Dibenzoylperoxiden und 40 bis 90 Gew.-% Silikonöl enthält.

8. Verwendung einer Zubereitung gemäß einem der Ansprüche 1 bis 7 zur Heißvernetzung von Silikonkautschuk.

9. Verfahren zur Herstellung einer Mischung von Dibenzoylperoxiden,
**dadurch gekennzeichnet,**
**dass** eine Mischung von Benzoylchloriden, enthaltend ein erstes Benzoylchlorid und ein davon verschiedenes zweites Benzoylchlorid, mit Wasserstoffperoxid umgesetzt wird, wobei die Mischung der Benzoylchloride 90 bis 99,7 mol-% des ersten Benzoylchlorids und 0,3 bis 10 mol-% des zweiten Benzoylchlorids enthält.

10. Verfahren nach Anspruch 9,
**dadurch gekennzeichnet,**
**dass** das erste substituierte Benzoylchlorid 2,4-Dichlorbenzoylchlorid ist.

11. Verfahren nach Anspruch 10,
**dadurch gekennzeichnet,**
**dass** das zweite Benzoylchlorid ausgewählt ist aus der Gruppe bestehend aus Benzoylchlorid, 2-Chlorbenzoylchlorid, 3-Chlorbenzoylchlorid, 4-Chlorbenzoylchlorid, 2,3-Dichlorbenzoylchlorid, 2,5-Dichlorbenzoylchlorid, 2,6-Dichlorbenzoylchlorid, 3,4-Dichlorbenzoylchlorid, 3,5-Dichlorbenzoylchlorid, 2,3,4-Trichlorbenzoylchlorid, 2,3,5-Trichlorbenzoylchlorid, 2,3,6-Trichlorbenzoylchlorid, 2,4,5-Trichlorbenzoylchlorid, 2,4,6-Trichlorbenzoylchlorid, 3,4,5-Trichlorbenzoylchlorid, 2,3,4,5-Tetrachlorbenzoylchlorid, 2,3,4,6-Tetrachlorbenzoylchlorid, 2,3,5,6-Tetrachlorbenzoylchlorid und Pentachlorbenzoylchlorid.

12. Verfahren nach Anspruch 9,
**dadurch gekennzeichnet,**
**dass** das erste substituierte Benzoylchlorid 4-Methylbenzoylchlorid ist.

13. Verfahren nach Anspruch 12,
**dadurch gekennzeichnet,**
**dass** das zweite Benzoylchlorid ausgewählt ist aus der Gruppe bestehend aus Benzoylchlorid, 2-Methylbenzoylchlorid, 3-Methylbenzoylchlorid, 2,3-Dimethylbenzoylchlorid, 2,4-Dimethylbenzoylchlorid, 2,5-Dimethylbenzoylchlorid, 2,6-Dimethylbenzoylchlorid, 3,4-Dimethylbenzoylchlorid, 3,5-Dimethylbenzoylchlorid, 2,3,4-Triraethylbenzoylchlorid, 2,3,5-Trimethylbenzoylchlorid, 2,3,6-Trimethylbenzoylchlorid, 2,4,5-Trimethylbenzoylchlorid, 2,4,6-Trimethylbenzoylchlorid, 3,4,5-Trimethylbenzoylchlorid, 2,3,4,5-Tetramethylbenzoylchlorid, 2,3,4,6-Tetramethylbenzoylchlorid, 2,3,5,6-Tetramethylbenzoylchlorid und Pentamethylbenzoylchlorid.

## Claims

1. A preparation for initiating free-radical reactions, comprising a mixture of dibenzoyl peroxides, **characterised in that** the mixture of dibenzoyl peroxides contains from 80 to 99.7 mol% of a symmetrical dibenzoyl peroxide and 0.3 to 20 mol% of asymmetrical dibenzoyl peroxides.

2. A preparation according to claim 1, **characterised in that** the asymmetrical dibenzoyl peroxides contain a benzoyl residue which has the same substitution pattern as the benzoyl residue of the symmetrical dibenzoyl peroxide.

3. A preparation according to any either of claims 1 to 2, **characterised in that** the symmetrical dibenzoyl peroxide is bis-(2,4-dichlorobenzoyl) peroxide.

4. A preparation according to claim 3, **characterised in that** it contains an asymmetrical dibenzoyl peroxide which contains a 2,4-dichlorobenzoyl residue and a residue selected from the group consisting of benzoyl, 2-chlorobenzoyl, 3-chlorobenzoyl, 4-chlorobenzoyl, 2,3-dichlorobenzoyl, 2,5-dichlorobenzoyl, 2,6dichlorobenzoyl, 3,4-dichlorobenzoyl, 3,5dichlorobenzoyl, 2,3,4-trichlorobenzoyl, 2,3,5trichlorobenzoyl, 2,3,6-trichlorobenzoyl, 2,4,5trichlorobenzoyl, 2,4,6-trichlorobenzoyl, 3,4,5trichlorobenzoyl, 2,3,4,5-tetrachlorobenzoyl, 2,3,4,6-tetrachlorobenzoyl, 2,3,5,6-tetrachlorobenzoyl and pentachlorobenzoyl.

5. A preparation according to any one of claims 1 to 2, **characterised in that** the symmetrical dibenzoyl peroxide is di-(4-methylbenzoyl) peroxide.

6. A preparation according to claim 5, **characterised in that** it contains an asymmetrical dibenzoyl peroxide which contains a 4-methylbenzoyl residue and a substituted residue selected from the group consisting of benzoyl, 2-methylbenzoyl, 3-methylbenzoyl, 2,3dimethylbenzoyl, 2,4-dimethylbenzoyl, 2,5dimethylbenzoyl, 2,6-dimethylbenzoyl, 3,4dimethylbenzoyl, 3,5-dimethylbenzoyl, 2,3,4trimethylbenzoyl, 2,3,5trimethylbenzoyl, 2,3,6trimethylbenzoyl, 2,4,5trimethylbenzoyl, 2,4,6trimethylbenzoyl, 3,4,5trimethylbenzoyl, 2,3,4,5-tetramethylbenzoyl, 2,3,4,6tetramethylbenzoyl, 2,3,5,6-tetramethylbenzoyl and pentamethylbenzoyl.

7. A preparation according to any one of claims 1 to 6, **characterised in that** it contains 10 to 60 wt.% of the mixture of dibenzoyl peroxides and 40 to 90 wt.% of silicone oil.

8. Use of a preparation according to any one of claims 1 to 7 for hot crosslinking silicone rubber.

9. A method for producing a mixture of dibenzoyl peroxides, **characterised in that** a mixture of benzoyl chlorides containing a first benzoyl chloride and a second benzoyl chloride differing therefrom is reacted with hydrogen peroxide, wherein the mixture of benzoyl chlorides contains 90 to 99.7 mol% of the first benzoyl chloride and 0.3 to 10 mol% of the second benzoyl chloride.

10. A method according to claim 9, **characterised in that** the first substituted benzoyl chloride is 2,4dichlorobenzoyl chloride.

11. A method according to claim 10, **characterised in that** the second benzoyl chloride is selected from the group consisting of benzoyl chloride, 2-chlorobenzoyl chloride, 3-chlorobenzoyl chloride, 4-chlorobenzoyl chloride, 2,3-dichlorobenzoyl chloride, 2,5dichlorobenzoyl chloride, 2,6-dichlorobenzoyl chloride, 3,4dichlorobenzoyl chloride, 3,5-dichlorobenzoyl chloride, 2,3,4-trichlorobenzoyl chloride, 2,3,5trichlorobenzoyl chloride, 2,3,6-trichlorobenzoyl chloride, 2,4,5-trichlorobenzoyl chloride, 2,4,6trichlorobenzoyl chloride, 3,4,5-trichlorobenzoyl chloride, 2,3,4,5-tetrachlorobenzoyl chloride, 2,3,4,6-tetrachlorobenzoyl chloride, 2,3,5,6tetrachlorobenzoyl chloride and pentachlorobenzoyl chloride.

12. A method according to claim 9, **characterised in that** the first substituted benzoyl chloride is 4methylbenzoyl chloride.

13. A method according to claim 12, **characterised in that** the second benzoyl chloride is selected from the group consisting of benzoyl chloride, 2-methylbenzoyl chloride, 3-methylbenzoyl chloride, 2,3-dimethylbenzoyl chloride, 2,4-dimethylbenzoyl chloride, 2,5dimethylbenzoyl chloride, 2,6-dimethylbenzoyl chloride, 3,4-dimethylbenzoyl chloride, 3,5dimethylbenzoyl chloride, 2,3,4-trimethylbenzoyl chloride, 2,3,5-trimethylbenzoyl chloride, 2,3,6trimethylbenzoyl chloride, 2,4,5-trimethylbenzoyl chloride, 2,4,6-trimethylbenzoyl chloride, 3,4,5-trimethylbenzoyl chloride, 2,3,4,5-tetramethylbenzoyl chloride, 2,3,4,6-tetramethylbenzoyl chloride, 2,3,5,6-tetramethylbenzoyl chloride and pentamethylbenzoyl chloride.

## Revendications

1. Préparation pour amorcer des réactions radicalaires, comprenant un mélange de peroxydes de dibenzoyle, **caractérisée en ce que** le mélange de peroxydes de dibenzoyle contient de 80 à 99,7 mol % d'un peroxyde de dibenzoyle symétrique et de 0,3 à 20 mol % de peroxydes de dibenzoyle asymétriques.

2. Préparation selon la revendication 1, **caractérisée en ce que** les peroxydes de dibenzoyle asymétriques contiennent un radical benzoyle, qui présente le même modèle de substitution que le radical benzoyle du peroxyde de dibenzoyle symétrique.

3. Préparation selon l'une des revendications 1 à 2, **caractérisée en ce que** le peroxyde de dibenzoyle symétrique est le peroxyde de bis-(2-4-dichlorobenzoyle).

4. Préparation selon la revendication 3, **caractérisée en ce qu'**elle renferme un peroxyde de dibenzoyle asymétrique, qui contient un radical 2,4-dichlorobenzoyle et un radical sélectionné parmi le groupe constitué du benzoyle, du 2-chlorobenzoyle, du 3-chlorobenzoyle, du 4-chlorobenzoyle, du 2,3-dichlorobenzoyle, du 2,5-dichlorobenzoyle, du 2,6-dichlorobenzoyle, du 3,4-dichlorobenzoyle, du 3,5--dichlorobenzoyle, du 2,3,4-trichlorobenzoyle, du 2,3,5-trichlorobenzoyle, du 2,3,6-trichlorobenzoyle, du 2,4,5-trichlorobenzoyle, du 2,4,6-trichlorobenzoyle, du 3,4,5-trichlorobenzoyle, du 2,3,4,5-tétrachlorobenzoyle, du 2,3,4,6-tétrachlorobenzoyle, du 2,3,5,6-tétrachlorobenzoyle et du pentachlorobenzoyle.

5. Préparation selon l'une des revendications 1 à 2, **caractérisée en ce que** le peroxyde de dibenzoyle symétrique est le peroxyde de di-(4-méthylbenzoyle).

6. Préparation selon la revendication 5, **caractérisée en ce qu'**elle-renferme un peroxyde de dibenzoyle asymétrique, qui contient un radical 4-méthylbenzoyle et un radical substitué sélectionné parmi le groupe constitué du benzoyle, du 2-méthylbenzoyle, du 3-méthylbenzoyle, du 2,3-diméthylbenzoyle, du 2,4-diméthylbenzoyle, du 2,5-diméthylbenzoyle, du 2,6-diméthylbenzoyle, du 3,4-diméthylbenzoyle, du 3,5-diméthylbenzoyle, du 2,3,4-triméthylbenzoyle, du 2,3,5-triméthylbenzoyle, du 2,3,6-triméthylbenzoyle, du 2,4,5-triméthylbenzoyle, du 2,4,6-triméthylbenzoyle, du 3,4,5-triméthylbenzoyle, du 2,3,4,5-tétraméthylbenzoyle, du 2,3,4,6-tétraméthylbenzoyle, du 2,3,5,6-tétraméthylbenzoyle et du pentaméthylbenzoyle.

7. Préparation selon l'une des revendications 1 à 6, **caractérisée en ce qu'**elle contient 10 à 60 % en poids du mélange de peroxydes de dibenzoyle et 40 à 90 % en poids d'huile silicone.

8. Utilisation d'une préparation selon l'une des revendications 1 à 7 pour la réticulation à chaud du caoutchouc silicone.

9. Procédé de production d'un mélange de peroxydes de dibenzoyle, **caractérisé en ce que** l'on fait réagir avec de l'eau oxygénée un mélange de chlorures de benzoyle, contenant un premier chlorure de benzoyle et un second chlorure de benzoyle différent du premier, le mélange de chlorures de benzoyle contenant 90 à 99,7 mol % en poids du premier chlorure de benzoyle et 0,3 à 10 mol % en poids du second chlorure de benzoyle.

10. Procédé selon la revendication 9, **caractérisé en ce que** le premier chlorure de benzoyle substitué est le chlorure de 2,4-dichlorobenzoyle.

11. Procédé selon la revendication 10, **caractérisé en ce que** le second chlorure de benzoyle est sélectionné parmi le groupe constitué du chlorure de benzoyle, du chlorure de 2-chlorobenzoyle, du chlorure de 3-chlorobenzoyle, du chlorure de 4-chlorobenzoyle, du chlorure de 2,3-dichlorobenzoyle, du chlorure de 2,5-dichlorobenzoyle, du chlorure de 2,6-dichlorobenzoyle, du chlorure de 3,4-dichlorobenzoyle, du chlorure de 3,5-dichlorobenzoyle, du chlorure de 2,3,4-trichlorobenzoyle, du chlorure de 2,3,5-trichlorobenzoyle, du chlorure de 2,3,6-trichlorobenzoyle, du chlorure de 2,4,5-trichlorobenzoyle, du chlorure de 2,4,6-trichlorobenzoyle, du chlorure de 3,4,5-trichlorobenzoyle, du chlorure de 2,3,4,5-tétrachlorobenzoyle, du chlorure de 2,3,4,6-tétrachlorobenzoyle, du chlorure de 2,3,5,6-tétrachlorobenzoyle et du chlorure de pentachlorobenzoyle.

12. Procédé selon la revendication 9, **caractérisé en ce que** le premier chlorure de benzoyle substitué est le chlorure de 4-méthylbenzoyle.

13. Procédé selon la revendication 12, **caractérisé en ce que** le second chlorure de benzoyle est sélectionné parmi le groupe constitué du chlorure de benzoyle, du chlorure de 2-méthylbenzoyle, du chlorure de 3-méthylbenzoyle, du chlorure de 2,3-diméthylbenzoyle, du chlorure de 2,4-diméthylbenzoyle, du chlorure de 2,5-diméthylbenzoyle, du chlorure de 2,6-diméthylbenzoyle, du chlorure de 3,4-diméthylbenzoyle, du chlorure de 3,5-diméthylbenzoyle, du chlorure de 2,3,4-triméthylbenzoyle, du chlorure de 2,3,5-triméthylbenzoyle, du chlorure de 2,3,6-triméthylbenzoyle, du chlorure de 2,4,5-triméthylbenzoyle, du chlorure de 2,4,6-triméthylbenzoyle, du chlorure de 3,4,5-triméthylbenzoyle, du chlorure de 2,3,4,5-tétraméthylbenzoyle, du chlorure de 2,3,4,6-tétraméthylbenzoyle, du chlorure de 2,3,5,6-tétraméthylbenzoyle et du chlorure de pentaméthylbenzoyle.
